# EUROPEAN PATENT APPLICATION

(11) **EP 4 769 733 A1**
(43) Date of publication of application: **01.07.2026**
(21) Application number: 25863945.9
(22) Date of filing: 25.08.2025
(51) Int. Cl.: H01M 50/258, H01M 50/249, H01M 10/658, B60L 50/64

(54) **BATTERY MODULE, BATTERY PACK COMPRISING SAME, AND VEHICLE**

(30) Priority: 03.09.2024 KR 20240119099
(71) Applicant: LG Energy Solution, Ltd., Seoul 07335 (KR)
(72) Inventor: LIM, Seung Hoo, Daejeon 34122 (KR); HONG, Minseok, Daejeon 34122 (KR)
(74) Representative: BCKIP Part mbB
(86) International application number: PCT/KR2025/012910
(87) International publication number: WO 2026/054396

(57) **Abstract**

A battery module according to one embodiment of the present invention includes a plurality of battery cells, a module case configured to accommodate the battery cells, a top cover configured to cover an upper portion of the module case, end plates provided at both longitudinal ends of the module case, and an isolation cover interposed between the battery cells and the end plate and configured to be structurally coupled to the end plate.

## Description

### [TECHNICAL FIELD]

The present invention relates to a battery module, a battery pack comprising the same, and a vehicle.

### [BACKGROUND ART]

Secondary batteries, unlike primary batteries which are non-rechargeable, are rechargeable batteries capable of charge and discharge cycles. They are widely utilized not only in portable electronic devices but also in electric vehicles (EVs) and hybrid electric vehicles (HEVs) driven by electric power sources.

Types of secondary batteries widely used today include lithium-ion batteries, lithium polymer batteries, nickel-cadmium batteries, nickel-hydrogen batteries, and nickel-zinc batteries. The operating voltage of a single secondary battery cell, i.e., a unit battery cell, is approximately 2.5 V to 4.6 V. Therefore, when a higher output voltage is required, a battery pack is formed by connecting a plurality of battery cells in series. In addition, the battery pack may be constructed by electrically connecting a plurality of battery cells in parallel according to the required charge/discharge capacity. Accordingly, the number of battery cells included in the battery pack may be variously determined depending on the required output voltage or charge/discharge capacity.

When a plurality of battery cells are connected in series and/or in parallel to form a battery pack, it is common practice to first configure a battery module including at least one battery cell, preferably a plurality of battery cells, and then construct a battery pack by combining at least one such battery module with other components. Here, the term "battery module" refers to a unit comprising a plurality of battery cells connected in series and/or in parallel, whereas the term "battery pack" refers to a unit in which a plurality of such battery modules are interconnected in series and/or in parallel to increase capacity and output.

Meanwhile, an end plate coupled in the front-rear direction of a conventional battery module has, in some cases, been provided with a predetermined hole or the like to enable mechanical coupling with an isolation cover disposed on an inner side of the end plate. For example, in a conventional battery module, a coupling method was employed in which a hole was formed in the end plate and a hook structure was provided on the isolation cover, thereby coupling the end plate with the isolation cover.

However, while such a structure may be advantageous for verifying the fastening state between the end plate and the isolation cover and for facilitating assembly and disassembly, it has the drawback that, when a thermal event occurs within the battery module, it is highly likely to exert an adverse effect on battery modules disposed adjacent thereto.

### [SUMMARY OF THE INVENTION]

### [TECHNICAL PROBLEM]

An object of the present invention is to improve an assembly structure of an end plate and an isolation cover so as to effectively inhibit thermal propagation between battery modules.

However, the technical objects to be solved by the present invention are not limited to those set forth above, and other objects not expressly mentioned will be clearly understood by those skilled in the art from the following description of the invention.

### [SOLUTION TO THE PROBLEM]

A battery module according to one embodiment of the present invention for solving the above-described problem comprises: a plurality of battery cells; a module case configured to house the battery cells; a top cover configured to cover an upper portion of the module case; end plates respectively provided at both longitudinal ends of the module case and not formed with a hole penetrating between an interior and an exterior thereof; and an isolation cover interposed between the battery cells and the end plates and configured to be structurally coupled to the end plates.

In one aspect of the present invention, the isolation cover comprises at least one guide pin protruding outward in a direction toward the exterior of the battery module, and the end plate may comprise at least one first sidewall groove configured to be engaged with the guide pin.

In another aspect of the present invention, the isolation cover may comprise at least one hook including a protruding extension extending from the isolation cover and a hook portion provided at a distal end of the protruding extension, and the end plate may comprise at least one second sidewall groove configured to be engaged with the hook.

In yet another aspect of the present invention, the end plate comprises at least one first rib extending to protrude inward, and the first rib is configured to be inserted into a receiving hole formed in the isolation cover.

Preferably, the first rib may be configured such that its width narrows toward its terminal end.

In one aspect of the present invention, the first rib may be configured to be snap-fitted into a receiving hole provided in the isolation cover.

In another aspect of the present invention, the isolation cover may comprise a hanging portion configured such that an edge of the isolation cover protrudes, and the end plate may comprise at least one third sidewall groove configured to engage with the hanging portion.

Preferably, the hanging portion may be configured to be snap-fitted into a third sidewall groove provided in the isolation cover.

In yet another aspect of the present invention, the end plate comprises at least one second rib protruding and extending in a direction toward an interior of the battery module, and the isolation cover may comprise a third rib protruding in a direction toward an exterior of the battery module and configured to come into abutment with the second rib.

Preferably, the second rib and the third rib may be configured to have a structure in which they abut each other in a pressurized state.

In one aspect of the present invention, the end plate and the isolation cover may be configured to have an interference fit structure with each other.

For example, the end plate may comprise a first horizontal region extending in a horizontal direction, the isolation cover may comprise a second horizontal region configured to horizontally contact a lower portion of the end plate, and the first horizontal region and the second horizontal region may be configured to have an interference-fit structure with each other.

Meanwhile, the present invention provides a battery pack comprising at least one battery cell according to the aforementioned embodiment.

In addition, the present invention provides a vehicle comprising at least one battery pack according to the aforementioned embodiment.

### [ADVANTAGEOUS EFFECTS OF THE INVENTION]

According to the present invention, even when a thermal event occurs within a battery module, heat propagation to an adjacent battery module can be effectively prevented.

At the same time, according to the present invention, the coupling force between the end plate of the battery module and the isolation cover can be improved.

Further, according to the present invention, the productivity and rigidity of the end plate can be improved.

However, the advantageous effects of the present invention are not limited to those described above, and other technical effects not explicitly mentioned will be clearly understood by those of ordinary skill in the art from the following description.

### [BRIEF DESCRIPTION OF DRAWINGS]

The accompanying drawings, which are incorporated in and constitute a part of this specification, illustrate preferred embodiments of the present invention and, together with the detailed description set forth below, serve to further clarify the technical idea of the present invention. However, the present invention should not be construed as being limited to the matters illustrated in these drawings.

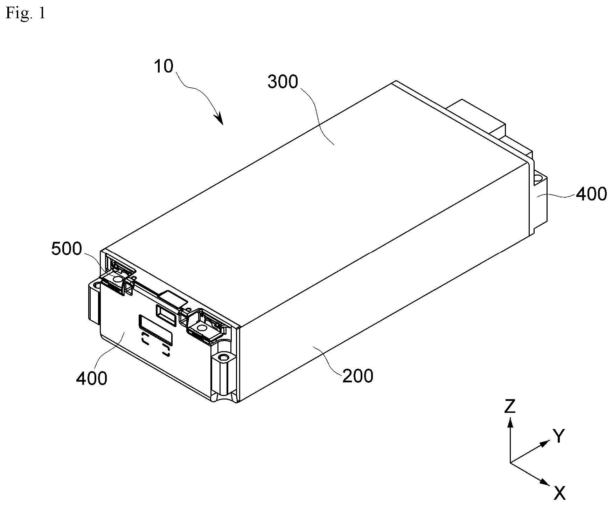

FIG. 1 is a view illustrating a battery module according to one embodiment of the present invention.
FIG. 1 is an exploded perspective view of FIG. 2.
FIG. 3 is a diagram illustrating a battery cell included in the battery module of FIG. 1.
FIG. 4 is a top plan view of the battery module of FIG. 1.
FIG. 5 is a diagram for explaining an end plate and an isolation cover according to one embodiment of the present invention.
FIG. 6 is a diagram showing a front view of an end plate and an isolation cover according to one embodiment of the present invention.
FIG. 7 is a diagram showing a cross-section of a partial area of an end plate and an isolation cover according to one embodiment of the present invention.
FIG. 8 is a diagram showing a cross-section taken along line C-C in FIGS. 6 and 7.
FIG. 9 is a diagram showing a cross-section taken along line D-D in FIG. 6.
FIG. 10 is a diagram showing a cross-section taken along line E-E in FIG. 6.
FIG. 11 is a diagram showing a cross-section taken along line F-F in FIG. 6.
FIG. 12 is a diagram for explaining a battery pack comprising at least one battery module according to an embodiment of the present invention.
FIG. 13 is a diagram for explaining a vehicle comprising at least one battery pack of FIG. 12.

### [MODES FOR CARRYING OUT THE INVENTION]

The advantages and features of the present invention, and the methods of achieving them, will become apparent with reference to the embodiments described in detail below in conjunction with the accompanying drawings. However, the present invention is not limited to the embodiments disclosed below, but may be implemented in various other forms. The embodiments are provided merely to ensure a complete disclosure of the present invention and to fully inform those skilled in the art of the scope of the invention. The present invention is defined only by the scope of the appended claims. Therefore, in some embodiments, well-known process steps, well-known device structures, and well-known technologies are not described in detail so as not to obscure the present invention. Throughout the specification, the same reference numerals refer to the same elements.

In the drawings, the thicknesses of layers and regions may be exaggerated to clearly show multiple layers and regions. Throughout the specification, similar parts are designated by the same reference numerals. When an element such as a layer, film, region, or plate is referred to as being "on" another element, it can be directly on the other element or intervening elements may be present. In contrast, when an element is referred to as being "directly on" another element, it is to be understood that there are no intervening elements present. Similarly, when an element is referred to as being "under" another element, it can be directly under the other element or intervening elements may be present. Conversely, when an element is referred to as being "directly under" another element, it is to be understood that there are no intervening elements present.

A statement that two subjects being compared are the same means that they are 'substantially identical.' Accordingly, 'substantial identity' may encompass variations within a tolerance deemed acceptable by one of ordinary skill in the art, for instance, a deviation of 5% or less. In addition, a parameter described as "uniform" within a predetermined region may refer to its average uniformity.

Throughout this specification, unless the context dictates otherwise, each component may be singular or plural.

The placement of a component 'on (or below)' or 'above (or beneath)' another component is to be understood as encompassing not only the case where the component is in direct contact with the upper (or lower) surface of the other component, but also the case where another component may be interposed therebetween.

Furthermore, when a component is described as being 'connected,' 'coupled,' or 'joined' to another component, it is to be understood that the components may be directly connected, coupled, or joined to each other, or may be connected, coupled, or joined via another component, with another component being interposed therebetween.

Throughout the specification, "A and/or B" shall mean A, B, or both A and B, and "C to D" shall mean a range from C to D inclusive, unless otherwise stated.

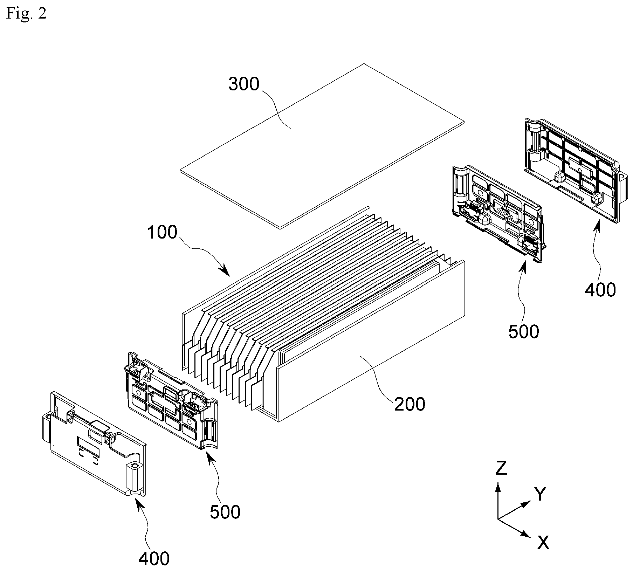

FIG. 1 is a diagram illustrating a battery module (10) according to an embodiment of the present invention, and FIG. 1 is an exploded perspective view of FIG. 2.

Referring to FIGS. 1 and 2, a battery module (10) according to the present invention includes battery cells (100), a module case (200), a top cover (300), end plates (400), and an isolation cover (500).

Referring to FIGS. 1 and 2, the battery module (10) may include a plurality of battery cells (100). The plurality of battery cells (100) may be stacked in at least one direction. More specifically, the plurality of battery cells (100) may be disposed in at least a horizontal direction. The plurality of battery cells (100) may be configured to be arranged side-by-side in a horizontal direction while in an upright orientation. For example, with reference to FIG. 2, the plurality of battery cells (100) may be configured to be arranged side by side in a left-right direction while being oriented upright in an up-down direction. Hereinafter, each of the plurality of battery cells (100) will be described in greater detail.

The battery cell (100) may be a secondary battery, and for example, may be a pouch-type battery cell (100). However, the present invention is not limited to the type of the battery cell (100), and other forms of battery cells (100), such as cylindrical cells or prismatic cells, may also be adopted in the battery module (10) of the present invention.

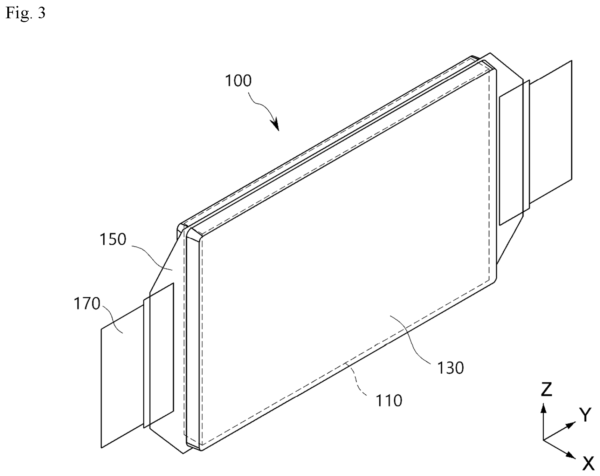

FIG. 3 is a diagram for explaining a battery cell (100) included in the battery module (10) of FIG. 1.

Hereinafter, a case where the battery cell (100) is a pouch-type cell will be described as an example, as shown in FIG. 3.

Referring to FIG. 3, the battery cell (100) may comprise an electrode assembly (110), a receiving portion (130) configured to accommodate the electrode assembly (110), a sealing portion (150) formed around the periphery of the receiving portion (130), and a pair of electrode leads (170) connected to the electrode assembly (110) and drawn out to the exterior of the sealing portion (150). The pair of electrode leads (170) are coupled with electrode tabs (not shown) provided in the electrode assembly (110) and may be drawn to the outside of the sealing portion (150) through the sealing portion (150). The pair of electrode leads (170) may have a shape extending along the longitudinal direction of the battery cell (100). The pair of electrode leads (170) may be drawn outward in the same direction or in mutually opposite directions.

Referring again to FIGS. 1 and 2, the module case (200) may be configured to accommodate the battery cells (100) in an internal space. That is, the module case (200) has an empty space formed therein, and can accommodate the battery cells (100) in the internal space. The module case (200) may be configured to accommodate the battery cells (100). The module case (200) may have a form in which one longitudinal side and the other longitudinal side are open.

The module case (200) may include a base plate extending horizontally and a side plate extending upward from the base plate. In this case, the base plate may be configured to have a plate shape that extends substantially in a horizontal direction. The side plate may be configured to have a plate shape extending in an approximately vertical direction. The base plate and the side plate may be configured to be perpendicular to each other. That is, the module case (200) may be configured as a U-shaped frame.

Meanwhile, the side plate may be provided in the width direction of the battery module (10). That is, the module case (200) may have a configuration in which a side plate is provided in the width direction, and the case is open at its longitudinal ends. In another aspect of the present invention, the base plate and the side plate may be integrally formed. Alternatively, the base plate and the side plate may be configured to be detachable.

Referring again to FIGS. 1 and 2, the top cover (300) may be located on at least one side of the module case (200). Preferably, the top cover (300) may be configured to cover the upper portion of the module case (200). That is, the top cover (300) may be mounted on the upper portion of the module case (200). The top cover (300) may cover the battery cells (100) at the upper portion of the module case (200).

In one aspect of the present invention, the top cover (300) may be configured to be detachable from the module case (200). The top cover (300) may also be configured integrally with the module case (200). In this case, the top cover (300) and the module case (200) may constitute a mono-frame. In another aspect of the present invention, the top cover (300) may be coupled to and/or uncoupled from an end plate (400) to be described later.

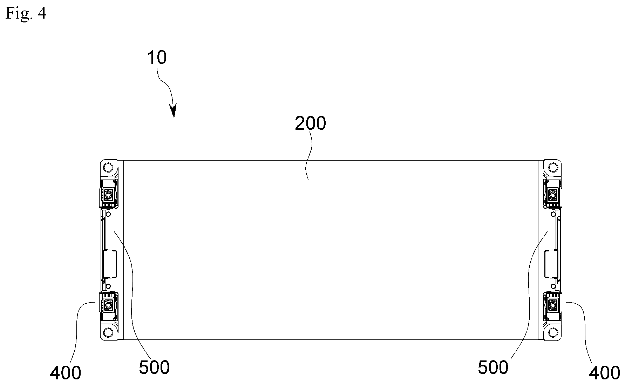

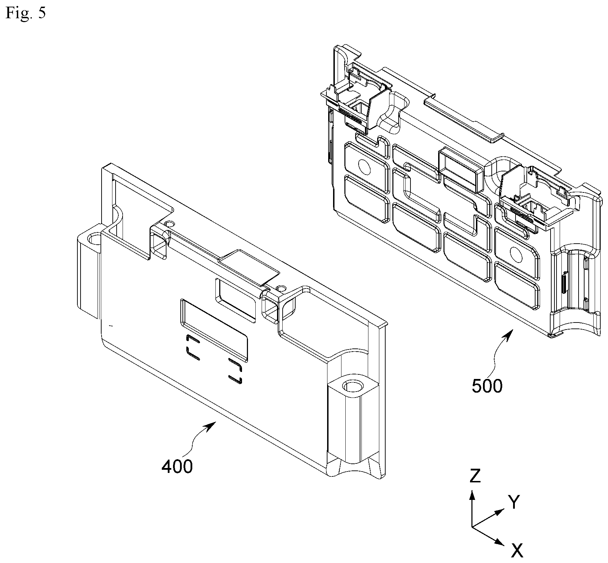

FIG. 4 is a top plan view of the battery module (10) of FIG. 1, and FIG. 5 is a diagram for explaining an end plate (400) and an isolation cover (500) according to an embodiment of the present invention.

Referring to FIGS. 4 and 5, the battery module (10) may include an end plate (400).

The end plate (400) may be provided at both longitudinal ends of the module case (200). The end plate (400) may be coupled to one longitudinal side and the other side of the module case (200). The end plate (400) may be configured to cover both longitudinal ends of the battery cells (100). More specifically, the end plate (400) may include a front end plate (400) and a rear end plate (400). The end plate (400) may be configured to be coupled to one longitudinal side and the other side of the module case (200) to cover one longitudinal end of the battery cells (100). The end plate (400) may include, for example, a plastic material.

In one aspect of the present invention, the end plate (400) may not be provided with a hole penetrating the inside and outside thereof.

A conventional end plate (400) has, in some cases, been formed with a predetermined hole or the like to enable mechanical coupling with an isolation cover (500) disposed on an inner side of the end plate (400). For example, a conventional battery module (10) employed a method of coupling the end plate (400) and the isolation cover by forming a hole in the end plate (400) and providing a hook (520) structure on the isolation cover (500). While this may be convenient for verifying the fastening state and for facilitating assembly and disassembly, it has the drawback that, when a thermal event occurs within the battery module (10), it is highly likely to exert an adverse effect on adjacent battery modules (10).

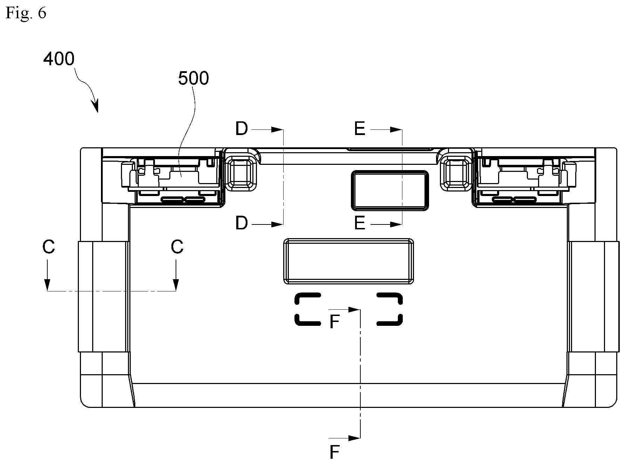

On the other hand, according to the present invention, the end plate (400) may not be provided with a hole penetrating the inside and outside thereof for assembly with the isolation cover (500). That is, the assembled portion of the end plate (400) with the isolation cover (500) is not exposed in appearance. Specifically, according to the present invention, it is possible to provide a structure enabling coupling between components through various assembly configurations without forming a separate hole in the end plate (400). This specific structure will be described in detail with reference to FIGS. 6 to 11 below, which show various cross-sections of the end plate (400) and the isolation cover (500).

Referring again to FIGS. 4 and 5, the battery module (10) includes an isolation cover (500).

The isolation cover (500) may be interposed between the battery cells (100) and the end plate (400). The isolation cover (500) may be configured in a structure that is in close contact with the inner surface of the end plate (400). The isolation cover (500) may be configured to be structurally coupled to the end plate (400). The isolation cover (500) may include, for example, plastic and/or resin material.

In a case where the battery module (10) of the present invention comprises a busbar frame assembly, the isolation cover (500) may be disposed on an outer side of the busbar frame assembly. For example, when the battery cell (100) is a pouch cell, leads protruding and extending in a front-rear direction may be secured to the busbar frame through lead slits of the busbar frame assembly. That is, a cell block may be formed in a state where a plurality of battery cells (100) are coupled to a busbar frame assembly, and the isolation cover (500) may be mounted in a front-rear direction of the cell block. Thereafter, an end plate (400) may be finally mounted in the front-rear direction of the isolation cover (500).

In this case, the end plate (400) and the isolation cover (500) must be physically coupled to each other. In a conventional battery module (10), the end plate (400) and the isolation cover were coupled by forming a hole in the end plate (400) and providing a hook (520) structure on the isolation cover (500); in contrast, the present invention does not provide a separate hole in the end plate (400). On the other hand, in the present invention, the inner surface of the end plate (400) and the outer surface of the isolation cover (500) can be firmly coupled to each other through a specific structure.

### (First embodiment)

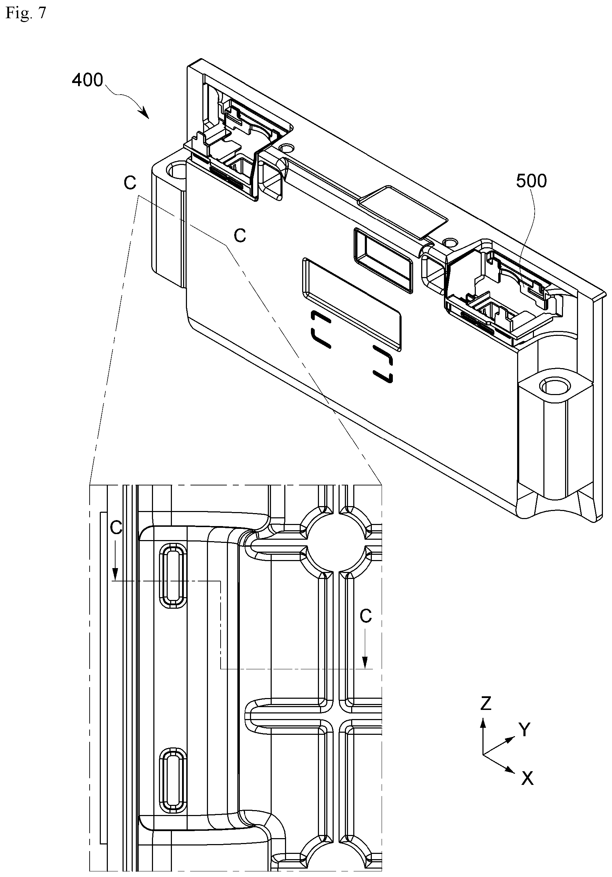

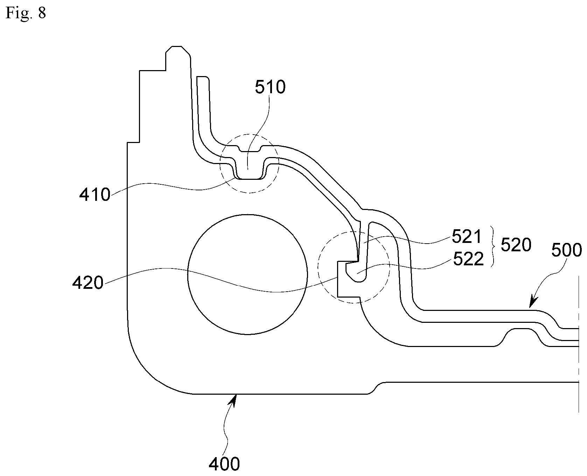

FIG. 6 is a diagram illustrating a front view of an end plate (400) and an isolation cover (500) according to one embodiment of the present invention, FIG. 7 is a diagram illustrating a cross-sectional view of a partial region of the end plate (400) and the isolation cover (500) according to one embodiment of the present invention, and FIG. 8 is a diagram illustrating a cross-section taken along line C-C in FIGS. 6 and 7.

In one aspect of the present invention, referring to FIGS. 6 to 8, the end plate (400) may include at least one first sidewall groove (410) on an inner surface. The first sidewall groove (410) may be formed, for example, through T-cutting.

Meanwhile, the isolation cover (500) may include at least one guide pin (510) protruding in a direction toward the outside of the battery module (10). In this case, the end plate (400) may include at least one first sidewall groove (410) configured to be coupled with the guide pin (510). Preferably, the guide pin (510) may be configured to have a shape that fits within the first sidewall groove (410). Alternatively, the width of the first sidewall groove (410) may be configured to be equal to or greater than the width of the guide pin (510).

According to this structure, the end plate (400) and the isolation cover (500) can be fixed in the left-right direction. That is, according to the above configuration, the left-right movement of the end plate (400) and the isolation cover (500) can be restricted. That is, according to the above configuration, even without providing a separate hole on the end plate (400), the end plate (400) and the isolation cover (500) can be stably coupled to each other. That is, in the event of a fire within the battery module (10), heat transfer to the adjacent battery module (10) can be improved by blocking the hole of the end plate (400). Additionally, the productivity and rigidity of the end plate (400) can be improved.

In another aspect of the present invention, the end plate (400) may include at least one second sidewall groove (420) on an inner surface. The second sidewall groove (420) may be formed, for example, through T-cutting.

Meanwhile, the isolation cover (500) may include at least one hook (520). The hook (520) may include a protruding extension (521) protruding from the isolation cover (500) and a hook portion (522) provided at a terminal end of the protruding extension (521). In this case, the end plate (400) may include at least one second sidewall groove (420) configured to be coupled with the hook (520). Preferably, the width of the hook portion (522) of the hook (520) may be configured to be less than or equal to the width of the second sidewall groove (420).

According to this structure, the end plate (400) and the isolation cover (500) can be fixed in the front-rear direction. That is, according to the above configuration, the front-rear movement of the end plate (400) and the isolation cover (500) can be restricted. That is, according to the above configuration, even without providing a separate hole on the end plate (400), the end plate (400) and the isolation cover (500) can be stably coupled to each other.

### (Second embodiment)

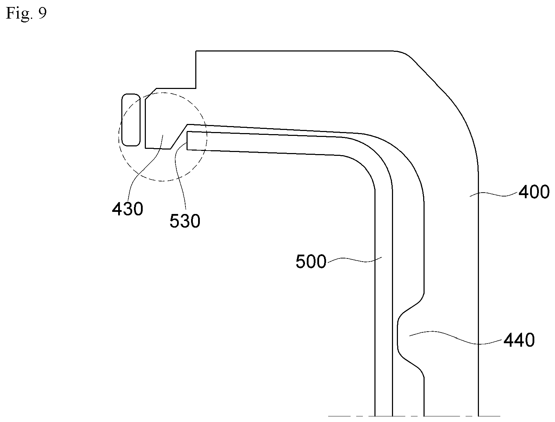

FIG. 9 is a diagram showing a cross-section taken along line D-D in FIG. 6.

In one aspect of the present invention, referring to FIG. 9, the end plate (400) may include at least one first rib (430) that protrudes and extends in an inward direction. Meanwhile, the isolation cover (500) may be provided with at least one receiving hole (530) penetrating the isolation cover (500). In this case, the first rib (430) may be configured to be inserted into a receiving hole (530) provided in the isolation cover (500). Preferably, the first rib (430) may be configured to be snap-fitted into a receiving hole (530) provided in the isolation cover (500).

Meanwhile, the first rib (430) may be configured to protrude in a downward direction of the battery module (10). The first rib (430) may be configured such that its width narrows toward its terminal end. According to this structure, the first rib (430) can be easily inserted into the receiving hole (530).

According to the above configuration, by providing a structure in which a hole is formed in the isolation cover (500) located on an inner side of the end plate (400), instead of forming a hole in the end plate (400) positioned at the outermost side of the battery module (10), the likelihood of exerting an adverse effect on adjacent battery modules (10), even if a thermal event occurs within the battery module (10), can be minimized. That is, in the event of a fire within the battery module (10), heat transfer to the adjacent battery module (10) can be improved by blocking the hole of the end plate (400). Additionally, the productivity and rigidity of the end plate (400) can be improved.

In another aspect of the present invention, referring again to FIG. 9, the end plate (400) may include at least one first protrusion (440) protruding inwardly. The first protrusion (440) may be configured to abut the isolation cover (500) in some cases. That is, the first protrusion (440) can be fixed in contact with the isolation cover (500) while being pressed against it. According to this configuration, the bonding strength between the isolation cover (500) and the end plate (400) can be additionally improved.

### (Third embodiment)

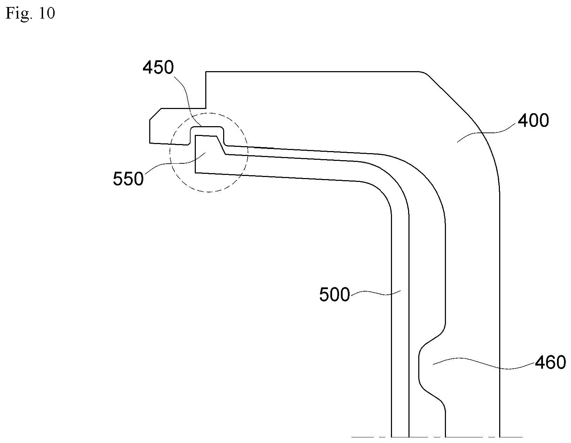

FIG. 10 is a diagram showing a cross-section taken along line E-E in FIG. 6.

In one aspect of the present invention, referring to FIG. 10, the end plate (400) may comprise at least one third sidewall groove (450) formed on an inner surface of the end plate (400). The third sidewall groove (450) may be formed, for example, through T-cutting.

Meanwhile, the isolation cover (500) may include a hanging portion (550) configured such that an edge of the isolation cover (500) protrudes. In this case, the end plate (400) may include at least one third sidewall groove (450) configured to be coupled with the hanging portion (550). Preferably, the hanging portion (550) may be configured to be snap-fitted into a third sidewall groove (450) provided in the isolation cover (500).

Meanwhile, the hanging portion (550) may be configured to protrude in an upward direction of the battery module (10). The hanging portion (550) may be configured such that its width narrows toward its terminal end. According to this structure, the hanging portion (550) can be easily inserted into the third sidewall groove (450).

According to the above configuration, by not forming a hole in the end plate (400) positioned at the outermost side of the battery module (10) and by providing only a small groove on an inner surface of the end plate (400), the likelihood of exerting an adverse effect on adjacent battery modules (10), even if a thermal event occurs within the battery module (10), can be minimized. That is, in the event of a fire within the battery module (10), heat transfer to the adjacent battery module (10) can be improved by blocking the hole of the end plate (400). Additionally, the productivity and rigidity of the end plate (400) can be improved.

In another aspect of the present invention, referring again to FIG. 10, the end plate (400) may include at least one second protrusion (460) protruding inwardly. The second protrusion (460) may be configured to abut the isolation cover (500) in some cases. That is, the second protrusion (460) can be fixed in contact with the isolation cover (500) while being pressed against it. According to this configuration, the bonding strength between the isolation cover (500) and the end plate (400) can be additionally improved.

### (Fourth embodiment)

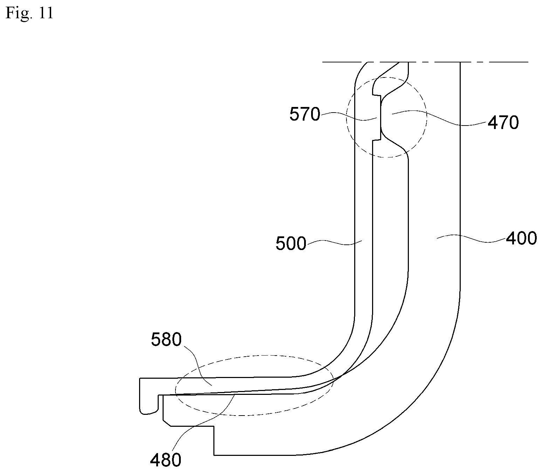

FIG. 11 is a diagram showing a cross-section taken along line F-F in FIG. 6.

In one aspect of the present invention, referring to FIG. 11, the end plate (400) may comprise at least one second rib (470) protruding and extending in a direction toward an interior of the battery module (10). Meanwhile, the isolation cover (500) may comprise a third rib (570) protruding in a direction toward an exterior of the battery module (10) and configured to come into abutment with the second rib (470). In this case, the second rib (470) and the third rib (570) may be configured to have a structure in which they abut each other in a pressurized state. The outermost protrusion of the second rib (470) can be fixed in contact with the outermost protrusion of the third rib (570) while being pressed against each other.

In another aspect of the present invention, the end plate (400) and the isolation cover (500) may be configured to have an interference fit structure with each other.

Referring again to FIG. 11, the end plate (400) may include a first horizontal region (480) extending horizontally. Meanwhile, the isolation cover (500) may include a second horizontal region (580) configured to horizontally contact a lower region of the end plate (400).

In this case, the first horizontal region (480) and the second horizontal region (580) may be configured to have an interference fit structure. That is, both the end plate (400) and the isolation cover (500) may be made of a plastic material. In this case, by generating friction between the plastic materials, an interference-fit structure can be realized between the first horizontal region (480) and the second horizontal region (580).

In another aspect of the present invention, the first horizontal region (480) and the second horizontal region (580) may be configured to be approximately parallel to each other. Accordingly, the contact area where the first horizontal region (480) and the second horizontal region (580) abut can be maximized. Therefore, as the contact resistance between the first horizontal region (480) and the second horizontal region (580) is maximized, the fixing force in the final fixing structure can be secured to a certain level or higher.

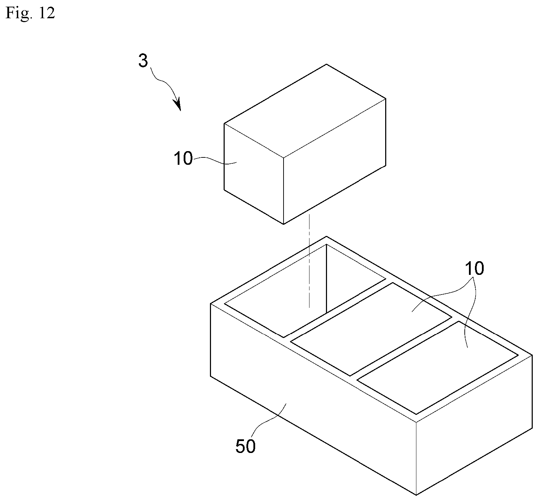

FIG. 12 is a diagram for explaining a battery pack (3) comprising at least one battery module (10) according to an embodiment of the present invention.

Referring to FIG. 12, a battery pack (3) according to the present invention may include at least one battery module (10) according to the present invention as described above. In addition, the battery pack (3) according to the present invention may include a pack case (50) configured to accommodate the at least one battery module (10). In addition to the battery module (10), various other components may further be included, such as components of the battery pack (3) known at the time of filing of the present invention, for example, a BMS, a pack case, a relay, and a current sensor.

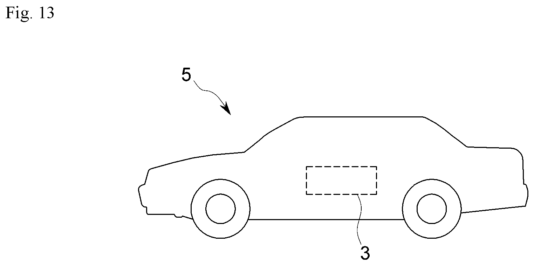

FIG. 13 is a diagram for explaining a vehicle (5) comprising at least one battery pack (3) of FIG. 12.

Referring to FIG. 13, a vehicle (5) according to the present invention may include at least one battery pack (3) according to the present invention. A vehicle (5) according to an embodiment of the present invention may be, for example, an electric vehicle (5), a hybrid vehicle (5), or a plug-in hybrid vehicle (5), and includes a battery pack (3) according to an embodiment of the present invention. The vehicle (5) includes a four-wheeled vehicle (5) and a two-wheeled vehicle (5).

The vehicle (5) operates by receiving power from a battery pack (3) according to one embodiment of the present invention. In addition, a vehicle (5) according to the present invention may further include various other components included in the vehicle (5) in addition to such battery cells (100) or a battery pack (3). For example, a vehicle (5) according to the present invention may further include, in addition to the battery cells (100) according to the present invention, a vehicle body, a motor, a control device such as an ECU (electronic control unit), etc.

Meanwhile, although directional terms such as "up" and "down" are used in this specification, such terms are provided merely for convenience of description, and it will be apparent to those skilled in the art that they may vary depending on the position of the object or the position of the observer.

While the present invention has been described with reference to certain limited embodiments and drawings, the present invention is not limited thereto, and it will be understood by those skilled in the art that various modifications and variations may be made within the technical spirit of the present invention and the equivalent scope of the claims set forth below.

### [INDUSTRIAL APPLICABILITY]

The present invention can provide a battery module that can effectively prevent heat propagation to an adjacent battery module even when a thermal event occurs within the battery module.

## Claims

1. A battery module, comprising:
a plurality of battery cells;
a module case configured to accommodate the battery cells;
a top cover configured to cover an upper portion of the module case;
end plates provided at both longitudinal ends of the module case; and
an isolation cover interposed between the battery cells and the end plates and configured to be structurally coupled to the end plates.

2. The battery module of claim 1, wherein
the isolation cover includes at least one guide pin protruding in a direction toward an outside of the battery module, and
the end plate includes at least one first sidewall groove configured to be engaged with the guide pin.

3. The battery module of claim 1, wherein
the isolation cover includes at least one hook including a protruding extension protruding from the isolation cover and a hook portion provided at a terminal end of the protruding extension, and
the end plate includes at least one second sidewall groove configured to be engaged with the hook.

4. The battery module of claim 1, wherein
the end plate includes at least one first rib protruding and extending in an inward direction, and
the first rib is configured to be inserted into a receiving hole provided in the isolation cover.

5. The battery module of claim 4, wherein
the first rib is configured such that its width narrows toward its terminal end.

6. The battery module of claim 4, wherein
the first rib is configured to be snap-fitted into a receiving hole provided in the isolation cover.

7. The battery module of claim 1, wherein
the isolation cover includes a hanging portion configured such that an edge of the isolation cover protrudes, and
the end plate includes at least one third sidewall groove configured to be coupled with the hanging portion.

8. The battery module of claim 7, wherein
the hanging portion is configured to be snap-fitted into a third sidewall groove provided in the isolation cover.

9. The battery module of claim 1, wherein
the end plate includes at least one second rib protruding and extending in a direction toward an inside of the battery module, and
the isolation cover includes a third rib that protrudes in a direction toward an outside of the battery module and is configured to abut the second rib.

10. The battery module of claim 9, wherein
the second rib and the third rib have a structure in which they abut each other in a pressurized state.

11. The battery module of claim 1, wherein
the end plate and the isolation cover are configured to have an interference fit structure with each other.

12. The battery module of claim 1, wherein
the end plate includes a first horizontal region extending horizontally,
the isolation cover includes a second horizontal region configured to be in horizontal contact with a lower region of the end plate, and
the first horizontal region and the second horizontal region are configured to have an interference fit structure with each other.

13. The battery module of claim 1, wherein
the end plate is not provided with a hole penetrating an inside and an outside thereof for coupling with the isolation cover.

14. A battery pack, comprising at least one battery module according to any one of claims 1 to 13.

15. A vehicle, comprising at least one battery pack according to claim 14.
